# EUROPÄISCHE PATENTSCHRIFT

(11) **EP 2 627 431 B1**
(45) Veröffentlichungstag und Bekanntmachung des Hinweises auf die Patenterteilung: **22.02.2017**
(21) Anmeldenummer: 11770051.8
(22) Anmeldetag: 05.10.2011
(51) Int. Cl.: B01D 53/053, B01D 53/047

(54) **VERFAHREN UND VORRICHTUNG ZUR VAKUUM-DRUCKWECHSELADSORPTION MIT ZWISCHENSPEICHERUNG**
METHOD AND DEVICE FOR VACUUM PRESSURE SWING ADSORPTION WITH TEMPORARY STORAGE
PROCÉDÉ ET DISPOSITIF D'ADSORPTION PAR ALTERNANCE DE PRESSION ET DE VIDE AVEC STOCKAGE INTERMÉDIAIRE

(30) Priorität: 16.10.2010 DE 102010048774
(43) Veröffentlichungstag der Anmeldung: 21.08.2013
(73) Patentinhaber: Linde Aktiengesellschaft, 80331 München (DE)
(72) Erfinder: GRAHL, Matthias, 80639 München (DE)
(74) Vertreter: Zahn, Christoph
(86) Internationale Anmeldenummer: PCT/EP2011/004969
(87) Internationale Veröffentlichungsnummer: WO 2012/048814

(56) Entgegenhaltungen:
- EP-A1- 0 462 778
- EP-A1- 0 537 614
- EP-A1- 0 654 439
- EP-A2- 1 078 674
- WO-A1-2004/052495
- US-A- 5 997 612

## Beschreibung

Die Erfindung betrifft ein Verfahren zur adsorptiven Zerlegung eines Gasgemisches mittels eines Vakuum-Druckwechseladsorptionsprozesses, wobei das zu zerlegende Gasgemisch vor der Zuführung in den Vakuum-Druckwechseladsorptionsprozess mittels wenigstens eines Verdichters auf den Adsorptionsdruck verdichtet wird und die Regenerierung des oder der Adsorber mittels wenigstens einer Vakuumpumpe erfolgt.

Ferner betrifft die Erfindung eine Vorrichtung zur Durchführung eines Verfahrens zur adsorptiven Zerlegung eines Gasgemisches mittels eines Vakuum-Druckwechseladsorptionsprozesses, aufweisend wenigstens einen Verdichter, wenigstens einen Adsorber und wenigstens eine Vakuumpumpe.

Vakuum-Druckwechseladsorptionsprozesse bzw. VPSA-Prozesse sind aus dem Stand der Technik hinlänglich bekannt. Sie unterscheiden sich von Druckwechseladsorptionsprozessen bzw. PSA-Prozessen dadurch, dass die Regenerierung eines beladenen Adsorbers bei einem subatmosphärischen Druck erfolgt. Um diesen zu erreichen, werden die zu regenerierenden Adsorber mittels einer Vakuumpumpe regeneriert. Der Desorptionsdruck liegt üblicherweise zwischen 100 und 500 mbara. Die Adsorption erfolgt meist bei Überdruck. Aus diesem Grund ist im Regelfall ein Verdichter vorgesehen, der das zu zerlegende Gasgemisch vor der Zuführung in den Vakuum-Druckwechseladsorptionsprozess auf den gewünschten Adsorptionsdruck verdichtet.

Die Vorteile von Vakuum-Druckwechseladsorptionsprozessen gegenüber herkömmlichen Druckwechseladsorptionsprozessen sind darin zu sehen, dass höhere Ausbeuten und ein geringerer Energiebedarf erreicht werden. Diese Vorteile werden jedoch durch das Vorsehen einer Vakuumpumpe erkauft, woraus eine Erhöhung der Investitionskosten von VPSA- gegenüber PSA-Prozessen, insbesondere bei Kleinanlagen, resultiert.

Während eines Vakuum-Druckwechseladsorptionsprozesses gibt es üblicherweise Verfahrensschritte, wie Druckausgleichs- oder Dump-Schritt, bei denen der Verdichter und/oder die Vakuumpumpe nicht benötigt werden. Während dieser Verfahrensschritte werden Verdichter und/oder Vakuumpumpe jedoch im Bypass-Betrieb weiter betrieben, da ein Abschalten wegen der Kürze der Verfahrensschritte praktisch unmöglich ist.

VPSA-Prozesse werden seit langem in sog. On-site-Anlagen zur Erzeugung von Sauerstoff verwendet und weisen einen sehr günstigen Energiebedarf auf. Bei Kleinanlagen - hierunter seien Anlagen mit einer Kapazität von weniger als 100 Nm³/h zu verstehen -, wie sie bspw. für die Versorgung von Krankenhäusern benötigt würden, konnten sich VPSA-Prozesse aufgrund der höheren Investitionskosten, die aus der zusätzlich erforderlichen Vakuumpumpe und einem erhöhten Adsorptionsmittel-Bedarf resultieren, bisher nicht durchsetzen. Unter dem Begriff "Krankenhaus" seien nachfolgend auch mobile (Notfall)Krankenhäuser, Ambulanzen, Arztpraxen, Wellness-Center, etc. zu verstehen.

Die Infrastruktur eines modernen Krankenhauses umfasst u. a. die Versorgung der Patienten mit sog. "medizinischer Luft", mit sauerstoffangereicherter Luft sowie mit reinem Sauerstoff. Unter dem Begriff "medizinische Luft" wird üblicherweise ein Gasgemisch verstanden, das ca. 20 % Sauerstoff und ca. 80 % Stickstoff aufweist und bezüglich anderer Komponenten, wie bspw. Wasser und Kohlenmonoxid, entsprechende Spezifikationen und/oder Vorschriften erfüllt. Des Weiteren umfasst die Infrastruktur eines Krankenhauses im Regelfall ein Druckluft- und ein Vakuumsystem. Bei Letztgenanntem handelt es sich um ein System, das mittels Vakuumpumpen und Pufferbehältern in einem Rohrleitungssystem ein Vakuum aufrechterhält, das im Krankenhaus für sämtliche Sauganwendungen, z. B. in Operationssälen, zur Verfügung steht. Für die Bereitstellung von Sauerstoff, Druckluft sowie des Vakuums werden bisher im Regelfall drei unterschiedliche, nicht miteinander verbundene Anlagen verwendet.

WO2004052495 offenbart ein Verfahren mittels eines Druckwechseladsorptionsprozesses, in dem ein Druckbehälter zwischen dem Verdichter und dem Adsorber angeordnet ist, wobei der Verdichter zwischenzeitlich ausgeschaltet wird, wenn der Druck in dem Druckbehälter einen bestimmten Wert erreicht.

EP0537614A1 offenbart ein Vakuum-Druckwechseladsorptionsprozess, in dem der Verdichter und die Vakuumpumpe zu bestimmten Zeiten nur Luft ansaugt,
komprimiert und wieder ablässt.

EP0462778A1 offenbart ein konventionelles Adsorptionsverfahren, welches nur einen Behälter zur Aufnahme des Produktgases aufweist.

Aufgabe der vorliegenden Erfindung ist es, ein gattungsgemäßes Verfahren sowie eine gattungsgemäße Vorrichtung zur adsorptiven Zerlegung eines Gasgemisches mittels eines Vakuum-Druckwechseladsorptionsprozesses anzugeben, das bzw. die die vorgenannten Nachteile vermeidet und insbesondere für die Anwendung in Krankenhäusern von Vorteil ist.

Zur Lösung dieser Aufgabe wird ein gattungsgemäßes Verfahren gemäss Anspruch 1 vorgeschlagen, sowie eine Vorrichtung gemäss Anspruch 7. Weitere vorteilhafte Ausgestaltungen des erfindungsgemäßen Verfahrens sowie der erfindungsgemäßen Vorrichtung zur adsorptiven Zerlegung eines Gasgemisches mittels eines Vakuum-Druckwechseladsorptionsprozesses, die Gegenstände der abhängigen Patentansprüche darstellen, sind dadurch gekennzeichnet, dass
- das adsorptiv zu zerlegende Gasgemisch Luft ist,
- die Verdichtung des adsorptiv zu zerlegenden Gasgemisches mittels einer ein- oder mehrstufigen Verdichtereinheit erfolgt,
- die Regenerierung des oder der Adsorber mittels einer ein- oder mehrstufigen Vakuumpumpeneinheit erfolgt,
- zumindest zeitweilig und/oder zumindest teilweise zwischengespeichertes, verdichtetes Gasgemisch dem oder einem in der Adsorptionsphase befindlichen Adsorber zugeführt wird, wobei die Zuführung vorzugsweise bei Überschreiten eines einstellbaren Druckwertes in der für die Zwischenspeicherung verwendeten Speichervorrichtung erfolgt, und
- sofern die für die Regenerierung des oder der Adsorber verwendete Vakuumpumpe zumindest zeitweilig mit einem zu evakuierenden Speicherbehälter verbunden wird, zumindest zeitweilig der zu evakuierende Speicherbehälter mit dem oder einem in der Desorptionsphase befindlichen Adsorber verbunden wird, wobei dieses Verbinden vorzugsweise bei Unterschreiten eines einstellbaren Druckwertes in dem Speicherbehälter erfolgt.

Das erfindungsgemäße Verfahren, die erfindungsgemäße Vorrichtung sowie weitere vorteilhafte Ausgestaltungen des- bzw. derselben seien nachfolgend anhand des in der **Figur** dargestellten Ausführungsbeispieles näher erläutert.

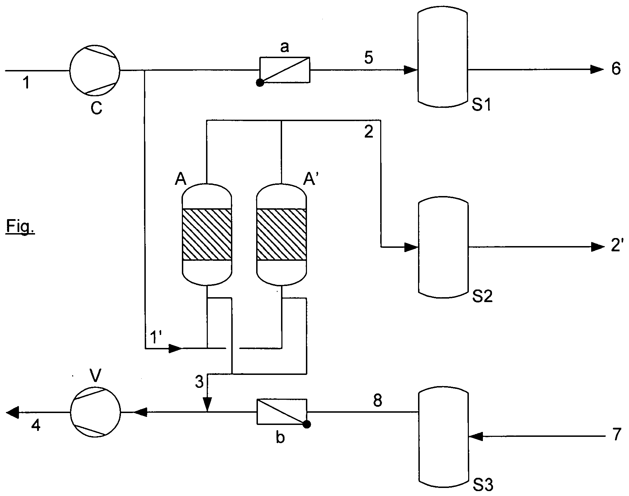

Dargestellt sind zwei parallel zueinander angeordnete Adsorber A und A', die zeitlich versetzt Adsorptions- und Desorptionsphasen durchlaufen. Das erfindungsgemäße Verfahren kann prinzipiell auch mit lediglich einem oder mehr als zwei Adsorbern realisiert werden. Der Übersichtlichkeit halber sind die den Adsorbern unmittelbar vor- und nachgeschalteten Adsorber-Ventile, deren Funktionen dem Fachmann geläufig sind, in der Figur nicht dargestellt. Die erfindungsgemäße VPSA-Anlage weist ferner eine Verdichtereinheit C, eine Vakuumpumpeneinheit V, drei Speicherbehälter S1 bis S3 sowie Ventile bzw. Rückschlagklappen a und b auf.

Die erfindungsgemäße Verfahrensweise sei nachfolgend anhand der adsorptiven Zerlegung von Luft unter Gewinnung eines Sauerstoff-reichen Produktstromes erläutert. Über Leitung 1 wird Luft einer ein- oder mehrstufig ausgelegten Verdichtereinheit C zugeführt und in dieser auf den gewünschten Adsorptionsdruck verdichtet. Der verdichtete Luftstrom wird anschließend über die Leitung 1' demjenigen der beiden Adsorber A bzw. A' zugeführt, der sich in der Adsorptionsphase befindet. Am Kopf des in der Adsorptionsphase befindlichen Adsorbers A bzw. A' wird über Leitung 2 ein Sauerstoff-reicher Produktstrom abgezogen und ggf. zwischengespeichert S2. Aus dem Speicherbehälter S2 kann der Sauerstoff-reiche Produktstrom über Leitung 2' entnommen und seiner weiteren Verwendung zugeführt werden.

Wird ein in der Adsorptionsphase beladener Adsorber regeneriert, wird er über Leitung 3 mit der Vakuumpumpeneinheit V verbunden. Mittels dieser erfolgt eine Regenerierung des beladenen Adsorbers auf den gewünschten, subatmosphärischen Desorptionsdruck. Das während der Regenerierung aus dem zu regenerierenden Adsorber abgezogene Gasgemisch wird über die Leitung 4 abgeführt und ggf. seiner weiteren Verwendung zugeführt.

Während derjenigen Verfahrensschritte des VPSA-Prozesses, bei denen einem Adsorber kein Einsatzgasgemisch zugeführt wird, wird nunmehr erfindungsgemäß die Verdichtereinheit C über die Leitung 5 mit dem ersten Speicherbehälter bzw. Druckluftpuffer S1 verbunden. In der Leitung 5 ist eine Rückschlagklappe a vorgesehen, die bei Erreichen eines bestimmten Drucks öffnet und damit den Zugang in den Druckluftpuffer S1 freigibt. Der für das Öffnen der Rückschlagklappe a erforderliche Druck wird dadurch erreicht, dass die den Adsorbern A und A' vorgeschalteten Adsorber-Ventile geschlossen sind. Eine Entnahme des verdichteten Luftstromes aus dem Druckluftpuffer S1 erfolgt über die Leitung 6. Alternativ oder ergänzend zu einer Zwischenspeicherung kann der mittels des Verdichters C verdichtete Luftstrom auch unmittelbar einem (Druckluft-)Verbraucher zugeführt werden.

Sofern durch Schließen der entsprechenden Adsorber-Ventile die Verbindung zwischen einem Adsorber und der Vakuumpumpeneinheit V unterbrochen wird, öffnet sich die in der Leitung 8 vorgesehene Rückschlagklappe b, so dass mittels der Vakuumpumpeneinheit V über die Leitungen 4 und 8 ein Evakuieren des dritten Speicherbehälters bzw. Vakuumpuffers S3 erfolgt. Das "Befüllen" des Behälters S3 erfolgt über die Leitung 7.

Der Druck im ersten Speicherbehälter bzw. Druckluftpuffer S1 liegt vorzugsweise oberhalb des maximalen Adsorptionsdrucks, während der Druck im dritten Speicherbehälter bzw. Vakuumpuffer S3 unterhalb des minimalen Desorptionsdrucks liegt.

Anstelle der in der Figur dargestellten Rückschlagklappen a und b kann jeder alternative Mechanismus verwendet werden, der im geeigneten und/oder gewünschten Zeitraum einen Verbindung zwischen dem ersten Speicherbehälter bzw. Druckluftpuffer S1 und dem Verdichter C sowie zwischen dem dritten Speicherbehälter bzw. Vakuumpuffer S3 und der Vakuumpumpe V herstellt. Lediglich beispielhaft genannt seien Schaltventile, die von der Steuerung des VPSA-Prozesses oder über eine Differenzdruckmessung angesteuert werden.

Eine weitere vorteilhafte Ausgestaltung des erfindungsgemäßen Verfahrens ist dadurch gekennzeichnet, dass zumindest zeitweilig und/oder zumindest teilweise zwischengespeichertes, verdichtetes Gasgemisch dem oder einem in der Adsorptionsphase befindlichen Adsorber zugeführt wird, wobei die Zuführung vorzugsweise bei Überschreiten eines einstellbaren Druckwertes in dem für die Zwischenspeicherung verwendeten Speicherbehälter S1 erfolgt. Im Falle einer zu geringen Abnahme von Druckluft steigt der Druck im Druckluftpuffer S1 an. Bei Überschreiten eines bestimmten Druckwertes, bspw. 8 bar, wird dann die verdichtete Luft aus dem Druckluftpuffer S1 zu einem geeigneten Zeitpunkt einem in der Adsorptionsphase befindlichen Adsorber A bzw. A' zugeführt. Hierdurch erhöht sich die Kapazität des VPSA-Prozesses, da mehr Eintrittsgas zur Verfügung steht. Ferner können eine unnötig hohe Energieaufnahme des Verdichters und/oder das Erreichen eines unzulässig hohen Drucks im Druckluftpuffer S1 verhindert werden.

Sofern die für die Regenerierung des oder der Adsorber verwendete Vakuumpumpe zumindest zeitweilig mit einem zu evakuierenden Speicherbehälter verbunden ist, wird gemäß einer weiteren vorteilhaften Ausgestaltung des erfindungsgemäßen Verfahrens zumindest zeitweilig der zu evakuierende Speicherbehälter mit dem oder einem in der Desorptionsphase befindlichen Adsorber verbunden, wobei dieses Verbinden vorzugsweise bei Unterschreiten eines einstellbaren Druckwertes in dem Speicherbehälter erfolgt. Im Falle eines zu geringen Bedarfs an Vakuum sinkt der Druck im Vakuumpuffer S3. Bei Unterschreiten eines bestimmten Drucks, bspw. 200 mbara, kann der Vakuumpuffer S3 zu einem geeigneten Zeitpunkt direkt, unter Umgehung der Rückschlagklappe b oder einer äquivalenten Vorrichtung, mit der Regeneriergasseite eines in der Desorptionsphase befindlichen Adsorbers verbunden werden. Hierdurch steigt die Kapazität des VPSA-Prozesses, da die Regenerierung effektiver erfolgt. Zudem können eine unnötig hohe Energieaufnahme der Vakuumpumpe und/oder das Unterschreiten eines unzulässig niedrigen Drucks im Vakuumpuffer S3 verhindert werden.

Mittels des erfindungsgemäßen Verfahrens kann beispielsweise Sauerstoff mit einer Reinheit von 93 % bei einer Leistung von 25 Nm³/h erzeugt werden; gleichzeitig können 30 Nm³/h Druckluft erzeugt und eine Vakuum-Saugleistung von 26 m³/h bereitgestellt werden.

Mittels der erfindungsgemäßen Verfahrensweise können Verdichter und Vakuumpumpe(n), die für den VPSA-Prozess erforderlich sind, zusätzlich für die Erzeugung von Druckluft und Vakuum verwendet werden. Dazu werden die zwangsläufig auftretenden Leerlaufzeiten dieser Maschine genutzt. Verdichter und Vakuumpumpe(n) werden dadurch effektiver genutzt und es entfallen im Vergleich zum Stand der Technik diejenigen, separaten Maschinen, die ansonsten für die Erzeugung von Druckluft und Vakuum vorzusehen wären.

Wie bereits erwähnt, laufen Verdichter und Vakuumpumpe(n), sofern sie während bestimmter Verfahrensschritte nicht benötigt werden, bisher im Bypass-Betrieb. Dieser Betrieb erfordert jedoch eine zusätzliche Verrohrung mit Leitungen und Bypass-Klappen, auf die nunmehr verzichtet werden kann.

Durch eine geeignete Dimensionierung der Maschinen sowie der Adsorber können das erfindungsgemäße Verfahren sowie die erfindungsgemäße Anlage an den jeweiligen Bedarf an Produkt bzw. Sauerstoff, Druckluft und/oder Vakuum angepasst werden. Zudem kann das erfindungsgemäße Verfahren in Zeiten geringer Produkt- bzw. Sauerstoff-Abnahme verstärkt zur Erzeugung von Druckluft und/oder Vakuum genutzt werden. In diesem Falle werden die Prozess- bzw. Verfahrensschritte des VPSA-Prozesses vorzugsweise entsprechend verlängert.

Das erfindungsgemäße Verfahren sowie die erfindungsgemäße Vorrichtung zur adsorptiven Zerlegung eines Gasgemisches mittels eines Vakuum-Druckwechseladsorptionsprozesses eignen sich insbesondere für die Anwendung in Krankenhäusern, da sie die Bereitstellung von Sauerstoff, Druckluft und Vakuum mittels eines einzigen Prozesses bzw. einer einzigen Anlage ermöglichen. Grundsätzlich kann die Erfindung jedoch in beliebigen Produktionsstätten und (Groß)Anlagen zur Anwendung kommen.

## Patentansprüche

1. Verfahren zur adsorptiven Zerlegung eines Gasgemisches mittels eines Vakuum-Druckwechseladsorptionsprozesses, wobei das zu zerlegende Gasgemisch vor der Zuführung in den Vakuum-Druckwechseladsorptionsprozess mittels wenigstens eines Verdichters auf den Adsorptionsdruck verdichtet wird und die Regenerierung des oder der Adsorber mittels wenigstens einer Vakuumpumpe erfolgt, **dadurch gekennzeichnet, dass**
- zu denjenigen Zeiten, zu denen dem Vakuum-Druckwechseladsorptionsprozess kein Gasgemisch zugeführt, das verdichtete Gasgemisch (1, 5, 6) zumindest zeitweilig und/oder zumindest teilweise über eine Rückschlagklappe (a), welche b
ei Erreichen eines bestimmen Drucks öffnet, zwischengespeichert (S1) und/oder einem Verbraucher zugeführt und/oder
- zu denjenigen Zeiten, zu denen keine Regenerierung des oder eines Adsorbers (A, A') mittels der oder zumindest einer der Vakuumpumpen (V) erfolgt, die oder wenigstens eine der nicht für die Regenerierung erforderlichen Vakuumpumpen (P) zumindest zeitweilig zum Evakuieren eines Speicherbehälters
herangezogen wird.

2. Verfahren nach Anspruch 1, **dadurch gekennzeichnet, dass** das adsorptiv zu zerlegende Gasgemisch Luft ist.

3. Verfahren nach Anspruch 1 oder 2, **dadurch gekennzeichnet, dass** die Verdichtung des adsorptiv zu zerlegenden Gasgemisches mittels einer ein- oder mehrstufigen Verdichtereinheit (C) erfolgt.

4. Verfahren nach einem der vorhergehenden Ansprüche 1 bis 3, **dadurch gekennzeichnet, dass** die Regenerierung des oder der Adsorber (A, A') mittels einer ein- oder mehrstufigen Vakuumpumpeneinheit (V) erfolgt.

5. Verfahren nach einem der vorhergehenden Ansprüche 1 bis 4, **dadurch gekennzeichnet, dass** zumindest zeitweilig und/oder zumindest teilweise zwischengespeichertes, verdichtetes Gasgemisch (S1) dem oder einem in der Adsorptionsphase befindlichen Adsorber (A, A') zugeführt wird, wobei die Zuführung vorzugsweise bei Überschreiten
eines einstellbaren Druckwertes in der für die Zwischenspeicherung verwendeten Speichervorrichtung (S1) erfolgt.

6. Verfahren nach einem der vorhergehenden Ansprüche 1 bis 5, wobei die für die Regenerierung des oder der Adsorber (A, A') verwendete Vakuumpumpe (V) zumindest zeitweilig mit einem zu evakuierenden Speicherbehälter (S3) verbunden wird, **dadurch gekennzeichnet, dass** zumindest zeitweilig der zu evakuierende Speicherbehälter (S3) mit dem oder einem in der Desorptionsphase befindlichen Adsorber (A, A') verbunden wird, wobei dieses Verbinden vorzugsweise bei Unterschreiten eines einstellbaren Druckwertes in dem Speicherbehälter (S3) erfolgt.

7. Vorrichtung zur Durchführung eines Verfahrens nach einem der vorhergehenden Ansprüche, aufweisend wenigstens einen Verdichter, wenigstens einen Adsorber, wenigstens eine Vakuumpumpe, eine erste Leitung (1, 1'), die den Verdichter und den Adsorber verbindet und eine zweite Leitung (3), die die Vakuumpumpe und den Adsorber verbindet, einen Behälter (S2), welcher zur Aufnahme eines Produktgases dient und eine dritte Leitung (2), die den Adsorber und den Behälter (S2) verbindet, ein dem Adsorber vorgeschaltetes Adsorber-Ventil und ein zwischen dem Adsorber und der Vakuumpumpe geschaltetes Adsorber-Ventil, **dadurch gekennzeichnet, dass**
- wenigstens ein erster Speicherbehälter (S1) und eine vierte Leitung (5) vorgesehen sind, wobei die vierte Leitung (5) von der ersten Leitung (1, 1') abzweigt und wobei die vierte Leitung (5) den ersten Speicherbehälter (S1) über eine Rückschlagklappe (a), welche bei Erreichen eines bestimmen Drucks öffnet, mit dem Verdichter (C) verbindet, und/oder
- wenigstens ein zweiter Speicherbehälter (S3) und eine fünfte Leitung (8) vorgesehen sind, wobei die fünfte Leitung (8) von der zweiten Leitung (3) abzweigt und wobei die fünfte Leitung (8) den zweiten Speicherbehälter (S3) über eine Rückschlagklappe (b), welche bei Erreichen eines bestimmen Drucks öffnet, mit der Vakuumpumpe (V) verbindet.

8. Vorrichtung nach Anspruch 7, **dadurch gekennzeichnet, dass** die Verdichtereinheit (C) und/oder die Vakuumpumpeneinheit (V) ein- oder mehrstufig ausgebildet sind.

## Claims

1. Method for the adsorptive separation of a gas mixture by means of a vacuum pressure swing adsorption process, wherein the gas mixture to be separated is compressed by at least one compressor to the adsorption pressure before being supplied to the vacuum pressure swing adsorption process and the regeneration of the adsorber or adsorbers takes place using at least one vacuum pump, **characterised by that**
- at the times at which no gas mixture is supplied to the vacuum pressure swing adsorption process, the compressed gas mixture (1, 5, 6) is stored intermediately (S1) and/or supplied to a consumer at least temporarily and/or at least partially via a non-return valve (a), which opens when a certain pressure is reached, and/or
- at the times at which no regeneration of the adsorber or an adsorber (A, A') takes place using the vacuum pump or at least one of the vacuum pumps (V), the vacuum pump or at least one of the vacuum pumps (P) not required for the regeneration is used at least temporarily for the evacuation of a storage container.

2. Method according to claim 1, **characterised by that** the gas mixture to be separated adsorptively is air.

3. Method according to claim 1 or 2, **characterised by that** the compression of the gas mixture to be separated adsorptively takes place using a single- or multistage compressor unit (C).

4. Method according to one of the preceding claims 1 to 3, **characterised by that** the regeneration of the adsorber or the adsorbers (A, A') takes place using a single- or multistage vacuum pump unit (V).

5. Method according to one of the preceding claims 1 to 4, **characterised by that** a compressed gas mixture (S1) that has been intermediately stored at least temporarily and/or at least partially is supplied to the adsorber or an adsorber (A, A') located in the adsorption phase, wherein the supply takes place preferably when a settable pressure value in the storage device (S1) used for the intermediate storage is exceeded.

6. Method according to one of the preceding claims 1 to 5, wherein the vacuum pump (V) used for the regeneration of the adsorber or the adsorbers (A, A') is connected at least temporarily to a storage container (S3) to be evacuated, **characterised by that** at least temporarily the storage container (S3) to be evacuated is connected to the adsorber or an adsorber (A, A') located in the desorption phase, wherein this connection preferably takes place when the pressure falls below a settable pressure value in the storage container (S3).

7. Device for executing a method according to one of the preceding claims, comprising at least one compressor, at least one adsorber, at least one vacuum pump, a first line (1, 1'), which connects the compressor and the adsorber and a second line (3), which connects the vacuum pump and the adsorber, a container (S2), which is used to receive a product gas and a third line (2), which connects the adsorber and the container (S2), an adsorber valve connected upstream of the adsorber and an adsorber valve connected between the adsorber and the vacuum pump, **characterised by that**
- at least a first storage container (S1) and a fourth line (5) are provided, wherein the fourth line (5) branches off from the first line (1, 1') and wherein the fourth line (5) connects the first storage container (S1) to the compressor (C) via a non-return valve (a), which opens when a certain pressure is reached, and/or
- at least a second storage container (S3) and a fifth line (8) are provided, wherein the fifth line (8) branches off from the second line (3) and wherein the fifth line (8) connects the second storage container (S3) to the vacuum pump (V) via a non-return valve (b), which opens when a certain pressure is reached.

8. Device according to claim 7, **characterised by that** the compressor unit (C) and/or the vacuum pump unit (V) is formed in one or more stages.

## Revendications

1. Procédé de séparation par adsorption d'un mélange gazeux au moyen d'un processus d'adsorption par alternance de pression et de vide, le mélange gazeux à séparer étant comprimé à la pression d'adsorption au moyen d'au moins un compresseur avant l'alimentation dans le processus d'adsorption par alternance de pression et de vide et la régénération du ou des adsorbant(s) se faisant au moyen d'au moins une pompe à vide, **caractérisé en ce que**
- aux moments où aucun mélange gazeux n'est alimenté dans le processus d'adsorption par alternance de pression et de vide, le mélange gazeux (1, 5, 6) comprimé est stocké de manière intermédiaire (S1) au moins temporairement et/ou au moins en partie par le biais d'un clapet de non-retour (a), qui s'ouvre lorsqu'une pression précise est atteinte, et/ou alimenté dans un consommateur et/ou
- aux moments où aucune régénération du ou d'un adsorbant (A, A') se fait au moyen de la ou d'au moins une des pompes à vide (V), la ou au moins une des pompes à vide (P) non requises pour la régénération est mise à contribution au moins temporairement pour obtenir le vide dans un réservoir de stockage.

2. Procédé selon la revendication 1, **caractérisé en ce que** le mélange gazeux à séparer par adsorption est de l'air.

3. Procédé selon la revendication 1 ou 2, **caractérisé en ce que** la compression du mélange gazeux à séparer par adsorption se fait au moyen d'une unité de compression (C) à un ou à plusieurs étages.

4. Procédé selon l'une des revendications précédentes 1 à 3, **caractérisé en ce que** la régénération du ou des adsorbant(s) (A, A') se fait au moyen d'une unité de pompage à vide (V) à un ou à plusieurs étages.

5. Procédé selon l'une des revendications précédentes 1 à 4, **caractérisé en ce que** du mélange gazeux (S1) comprimé stocké de manière intermédiaire est alimenté au moins temporairement et/ou au moins en partie dans l'adsorbant ou un adsorbant (A, A') se trouvant dans la phase d'adsorption, l'alimentation se faisant de préférence lors du dépassement d'une valeur de pression paramétrable dans le dispositif de stockage (S1) utilisé pour le stockage intermédiaire.

6. Procédé selon l'une des revendications précédentes 1 à 5, la pompe à vide (V) utilisée pour la régénération du ou des adsorbant(s) (A, A') étant reliée au moins temporairement à un réservoir de stockage (S3) dans lequel le vide doit être fait, **caractérisé en ce que** le réservoir de stockage (S3) dans lequel le vide doit être fait est relié au moins temporairement au ou à un adsorbant (A, A') se trouvant dans la phase de désorption, cette liaison se faisant de préférence lors d'un dépassement vers le bas d'une valeur de pression paramétrable dans le réservoir de stockage (S3).

7. Dispositif destiné à exécuter un procédé selon l'une des revendications précédentes, comportant au moins un compresseur, au moins un adsorbant, au moins une pompe à vide, une première conduite (1, 1'), qui relie le compresseur et l'adsorbant et une deuxième conduite (3), qui relie la pompe à vide et l'adsorbant, un réservoir (S2), qui sert à recevoir un gaz produit et une troisième conduite (2), qui relie l'adsorbant et le réservoir (S2), une vanne d'adsorbant placée en amont de l'adsorbant et une vanne d'adsorbant placée entre l'adsorbant et la pompe à vide, **caractérisé en ce que**
- au moins un premier réservoir de stockage (S1) et une quatrième conduite (5) sont prévus, la quatrième conduite (5) bifurquant de la première conduite (1, 1') et la quatrième conduite (5) reliant le premier réservoir de stockage (S1) au compresseur (C) par le biais d'un clapet de non-retour (a), qui s'ouvre lorsqu'une pression précise est atteinte, et/ou
- au moins un second réservoir de stockage (S3) et une cinquième conduite (8) sont prévus, la cinquième conduite (8) bifurquant de la deuxième conduite (3) et la cinquième conduite (8) reliant le second réservoir de stockage (S3) à la pompe à vide (V) par le biais d'un clapet de non-retour (b), qui s'ouvre lorsqu'une pression précise est atteinte.

8. Dispositif selon la revendication 7, **caractérisé en ce que** l'unité de compression (C) et/ou l'unité de pompage à vide (V) sont réalisées à un ou à plusieurs étages.
